# EUROPÄISCHE PATENTANMELDUNG

(11) **EP 1 580 868 A1**
(43) Veröffentlichungstag der Anmeldung: **28.09.2005**
(21) Anmeldenummer: 04006934.6
(22) Anmeldetag: 23.03.2004
(51) Int. Cl.: H02K 9/26, C01B 3/50

(54) **Wasserstoffgekühlter Generator mit Trennvorrichtung**

(71) Anmelder: SIEMENS AKTIENGESELLSCHAFT, 80333 München (DE)
(72) Erfinder: Lehmann, Christoph, Dr., 47506 Neukirchen-Vluyn (DE)

(57) **Zusammenfassung**

Die Erfindung betrifft einen wasserstoffgekühlten Generator (1) mit einem Gehäuse (6) mit darin angeordnetem Stator und einem Rotor, mit Zu- (3) und Abführungsleitungen (5) für Wasserstoff als Kühlgas, wobei in der Zu- (3) oder Abführungsleitung (5) zumindest eine Trennvorrichtung (7, 8) mit einer Membran (12) angekoppelt ist, die derart ausgebildet ist, dass sie aus einem Gemisch aus Wasserstoff und Verunreinigungen den Wasserstoff von den Verunreinigungen trennt.

## Beschreibung

Die Erfindung betrifft einen wasserstoffgekühlten Generator mit einem Gehäuse mit darin angeordnetem Stator und einem Rotor, mit Zu- und Abführungsleitungen für Wasserstoff als Kühlgas.

Es ist seit langem allgemein bekannt die Verlustwärme in Generatoren mittels Kühlgas abzuführen. Hierbei wurde ursprünglich als Kühlgas Luft vorgesehen. Allerdings sind luftgekühlte Generatoren nur für niedrige Leistungen bis maximal 300 MVA vorgesehen, da die mit Luft erzielbare Kühlwirkung zwangsläufig begrenzt ist und daher bei höheren Leistungen mit Luft nicht die erforderliche Kühlung gewährleistet ist.

Für Generatoren höherer Leistung wird als Kühlmedium bevorzugt Wasserstoffgas (H₂) eingesetzt, welches gegenüber Luft eine deutlich höhere Kühlleistung ermöglicht, die erhöht werden kann, indem man das Wasserstoffgas unter Druck setzt und die Kühlung unter Überdruck durchführt. Da Wasserstoff eine höhere Wärmekapazität und eine höhere Wärmeleitfähigkeit als Luft aufweist, kann durch die Füllung des Generatorgehäuses mit Wasserstoff die Wärme besser vom Generator abgeleitet werden, als dies mit Luft möglich wäre. Allerdings erfordert die Kühlung mit Wasserstoffgas einen zusätzlichen, nicht unbeträchtlichen Aufwand, der sich sowohl bei der Anschaffung als auch später im Betrieb kostenmäßig auswirkt.

Ein Begleitproblem bei der Generatorkühlung mit Wasserstoffgas sind die praktisch unvermeidbaren Verluste an Wasserstoffgas, hauptsächlich in Folge von Leckagen an der Wellendurchführung der Rotorwelle durch das Gehäuse des Generators. Um diese Verluste zu verhindern oder zumindest niedrig zu halten, sind die Wellendurchführungen jeweils mit einer Wellendichtung versehen, die als Ölbad-Abdichtung ausgebildet ist. Ein weiteres Problem ist die Feuchtigkeit des Wasserstoffkühlgases. Während einer Inbetriebnahme oder während einer Revision sind in der Regel die Isolationsbauteile des Generators der Luftatmosphäre ausgesetzt. Das führt dazu, dass Feuchtigkeit aus der Luft von den Isolationsbauteilen aufgenommen wird. Während des Betriebes des Generators unter Wasserstoffkühlgas-Atmosphäre wird durch die in den Isolationsbauteilen angesammelte Luft Feuchtigkeit an den Wasserstoff abgegeben.

Daher sind verschiedene Ausführungsformen von Trocknungsvorrichtungen für das Wasserstoffgas vorgesehen, welche die Trockenheit des Wasserstoffgases sicherstellen. Eine der Trocknungsvorrichtungen wird durch ein Trocknungs-Gel realisiert. Dabei wird feuchtes Wasserstoffgas in einem Kreislauf durch einen ein Trocknungs-Gel aufweisenden Gastrockner geleitet. Das Wasserstoffgas gibt seine Feuchtigkeit an das Trocknungs-Gel ab. Das mit Feuchtigkeit gesättigte Trocknungs-Gel wird anschließend mittels heißer Luft getrocknet.

Ein weiteres Problem bei dem Einsatz von Wasserstoffgas als Kühlgas ist die immer wieder vorkommende Verunreinigung durch Luft, Kohlendioxid oder Wasser. Die Verunreinigungen entstehen durch Leckagen im Gehäuse oder durch luftgesättigtes Dichtöl an der Wellendichtung.

Derzeit wird die Verunreinigung des Kühlgases minimiert, indem frisches und reines Wasserstoffkühlgas stetig nachgeführt wird und verunreinigtes Wasserstoffkühlgas stetig abgeführt wird.

Eine weitere Möglichkeit besteht, indem der Gasdruck des Wasserstoffkühlgases nachts gesenkt wird und anschließend verunreinigtes Wasserstoffkühlgas abgelassen und frisches und reines Wasserstoffkühlgas wieder aufgefüllt wird.

Aufgabe der Erfindung ist es, einen wasserstoffgekühlten Generator mit einem verbesserten Wirkungsgrad anzugeben.

Die Aufgabe wird gelöst durch einen wasserstoffgekühlten Generator mit einem Gehäuse mit darin angeordnetem Stator und einem Rotor, mit Zu- und Abführungsleitungen für Wasserstoff als Kühlgas, wobei in der Zu- oder Abführungsleitung zumindest eine Trennvorrichtung mit einer Membran angeordnet ist.

Der Vorteil ist unter anderem darin zu sehen, dass das Kühlgas in einem Kreislauf strömt und durch eine Membran aufweisende Trennvorrichtung ständig gereinigt und dadurch auch getrocknet wird. Ein komplizierter Austausch von Trocknungs-Gel oder eine komplizierte Trocknung von mit Feuchtigkeit gesättigtem Trocknungs-Gel mittels heißer Luft entfällt.

Mit der Leitung des gereinigten Wasserstoffkühlgases durch die Trennvorrichtung steigt die Wasserstoffkühlgas-Konzentration im Generator. Die Gasdichte sinkt dadurch und damit auch die Gasreibung. Hierdurch steigt der Wirkungsgrad des Generators an. Das heißt, bei gleicher Leistungsabgabe des Generators ist weniger Brennstoffverbrauch in einem Kraftwerk zu berücksichtigen.

In einer vorteilhaften Ausgestaltung wird jeweils zumindest eine Trennvorrichtung mit einer Membran in der Zu- als auch in der Abführungsleitung angeordnet.

Mit dieser Maßnahme wird in einleuchtender Weise das Wasserstoffkühlgas zusätzlich gereinigt und getrocknet.

In einer weiteren vorteilhaften Ausgestaltung ist die Trennvorrichtung derart ausgebildet, dass lediglich Wasserstoff durchdringt. Ferner ist die Trennvorrichtung derart ausgebildet, dass aus einem Gemisch aus Wasserstoff und Verunreinigungen der Wasserstoff von den Verunreinigungen getrennt wird. Durch die Auswahl einer geeigneten Membran, die lediglich Wasserstoff durchlässt, aber keine anderen Stoffe wie z. B. Verunreinigungen, wird die Möglichkeit geschaffen, im Kühlkreislauf des Generators Wasserstoffkühlgas bereitzustellen, das einen sehr hohen Reinheitsgrad hat. Unter Reinheitsgrad ist hierbei die Menge an Wasserstoff pro Mol Kühlgas zu verstehen. Ein Reinheitsgrad von 100% bedeutet demnach, dass das Kühlgas zu 100% aus Wasserstoff besteht. In diesem Fall können keine Verunreinigungen in dem Kühlgas gefunden werden.

Die Verunreinigung kann hierbei Wasserdampf, Wasser, Kohlendioxid oder Luft beinhalten. Insbesondere kann die Verunreinigung ein Gemisch aus Wasserdampf, Wasser, Kohlendioxid und Luft sein.

In einer vorteilhaften Ausgestaltung weist die Membran die Materialien Palladium und Kupfer oder Palladium oder Kupfer auf. Dadurch werden Materialien vorgestellt, die in einer Ausführungsform als Membran lediglich Wasserstoff durchlassen und andere Stoffe nicht durchlassen. Darüber hinaus sind die beiden Materialien kostengünstig.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- Figur 1: eine perspektivische Darstellung eines wasserstoffgekühlten Generators mit Trennvorrichtungen;
- Figur 2: eine perspektivische und schematische Darstellung einer Trennvorrichtung.

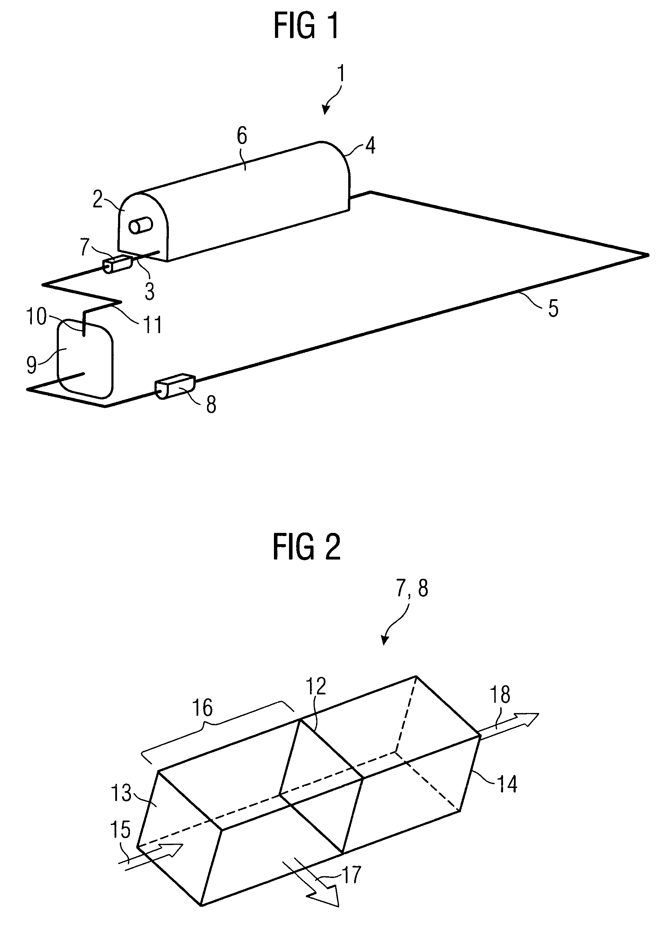

In Figur 1 ist ein wasserstoffgekühlter Generator 1 in schematischer und perspektivischer Weise dargestellt. An einer Vorderseite 2 des Generators ist eine Zuleitung 3 angeordnet. An einer Rückseite 4 ist eine Abführungsleitung 5 angeordnet. Der wasserstoffgekühlte Generator 1 weist ein Gehäuse 6 auf. In dem Gehäuse 6 sind ein nicht näher dargestellter Stator und ein Rotor angeordnet.

In einem Wasserstofftank 9 ist Wasserstoff gelagert. Der Wasserstoff wird als Kühlgas für den wasserstoffgekühlten Generator 1 eingesetzt. Das Kühlgas kann mit Kohlendioxid, Luft oder Wasser oder einem Gemisch aus Kohlendioxid, Luft und Wasser verunreinigt sein. Das Kühlgas gelangt über einen Auslass 10 und einer Zuleitung 11 zur Trennvorrichtung 7.

Die Trennvorrichtung 7 weist eine Membran 12 auf. Die Trennvorrichtung 7 ist derart ausgebildet, dass der in der Zuleitung 11 im Kühlgas befindliche Wasserstoff von den Verunreinigungen getrennt wird.

Das Kühlgas tritt aus einer nicht näher dargestellten Austrittsöffnung in eine Abführungsleitung 5 aus. Das Kühlgas gelangt anschließend zu einer zweiten Trennvorrichtung 8. Die zweite Trennvorrichtung 8 ist derart ausgebildet, dass lediglich Wasserstoff durch diese Trennvorrichtung durchdringt. Verunreinigungen wie Kohlendioxid, Luft oder Wasser werden vom Kühlgas getrennt.

Selbstverständlich ist eine Ausführungsform ohne zweite Trennvorrichtung 8 möglich.

In der Figur 2 ist schematisch und perspektivisch eine Trennvorrichtung 7, 8 dargestellt. Die Trennvorrichtung 7, 8 weist eine Eingangsseite 13 und eine Ausgangsseite 14 auf. An der Eingangsseite 13 strömt Kühlgas 15, bestehend aus Wasserstoff und Verunreinigungen zur Trennvorrichtung 7, 8. In einem Trennbereich 16 wird das Kühlgas 15 gesammelt. Durch eine Membran 12 gelangt nur der Wasserstoff des Kühlgases 15 hindurch. Verunreinigungen können nicht durch die Membran hindurch. Dadurch wird der Wasserstoff von den Verunreinigungen getrennt. Die Verunreinigungen strömen über eine Trennleitung 17 aus der Trennvorrichtung 7, 8 hinaus.

Die Membran 12 kann hierbei aus Palladium oder Kupfer sein. Denkbar ist auch eine Ausführungsform mit Palladium und Kupfer.

An der Ausgangsseite 14 ist eine Abführung 18 angeordnet, durch die der Wasserstoff weiterströmt.

## Patentansprüche

1. Wasserstoffgekühlter Generator (1) mit einem Gehäuse (6) mit darin angeordnetem Stator und einem Rotor, mit Zu-(3) und Abführungsleitungen (5) für Wasserstoff als Kühlgas,
**dadurch gekennzeichnet, dass**
in der Zu- (3) oder Abführungsleitung (5) zumindest eine Trennvorrichtung (7, 8) mit einer Membran (12) angeordnet ist.

2. Wasserstoffgekühlter Generator (1) nach Anspruch 1,
**dadurch gekennzeichnet, dass**
in den Zu- (3) und Abführungsleitungen (5) jeweils zumindest eine Trennvorrichtung (7, 8) mit einer Membran (12) angeordnet ist.

3. Wasserstoffgekühlter Generator (1) nach Anspruch 1 oder 2,
**dadurch gekennzeichnet, dass**
die Trennvorrichtung (7, 8) derart ausgebildet ist, dass lediglich Wasserstoff durchdringen kann.

4. Wasserstoffgekühlter Generator (1) nach einem der Ansprüche 1 bis 3,
**dadurch gekennzeichnet, dass**
die Trennvorrichtung (7, 8) aus einem Gemisch aus Wasserstoff und Verunreinigungen den Wasserstoff von den Verunreinigungen trennt.

5. Wasserstoffgekühlter Generator (1) nach einem der Ansprüche 1 bis 4,
**dadurch gekennzeichnet, dass**
die Membran Palladium und/oder Kupfer aufweist.
